# EUROPÄISCHE PATENTSCHRIFT

(11) **EP 2 208 987 B1**
(45) Veröffentlichungstag und Bekanntmachung des Hinweises auf die Patenterteilung: **18.04.2012**
(21) Anmeldenummer: 09000432.6
(22) Anmeldetag: 14.01.2009
(51) Int. Cl.: G01N 21/89, G01N 21/898, G01N 21/93

(54) **Verfahren und Anordnung zur visuellen Oberflächeninspektion**
Method and device for visual surface inspection
Procédé et installation d'inspection de surface visuelle

(43) Veröffentlichungstag der Anmeldung: 21.07.2010
(73) Patentinhaber: Baumer Inspection GmbH, 78467 Konstanz (DE)
(72) Erfinder: Eberhardt, Jörg, 88074 Sibratshaus (DE); Massen, Robert, 78337 Öhringen (DE)
(74) Vertreter: Strauss, Steffen

(56) Entgegenhaltungen:
- WO-A-93/25894
- US-A- 5 073 712
- US-A1- 2002 085 201
- US-A1- 2002 134 523

## Beschreibung

Die Erfindung betrifft ein Verfahren zur visuellen Oberflächeninspektion von Oberflächen mit Bildgebern, welche die zu inspizierende Oberfläche jeweils mit einer Vielzahl von Sensorbildpunkten objektbildpunktweise abtasten. Die Erfindung betrifft ferner eine Anordnung zur visuellen Oberflächeninspektion von Oberflächen.

Aus der US 2002/0085201 A1 sind ein Verfahren und eine Anordnung zum Messen verschiedener Eigenschaften von Papierbahnen bekannt. Die Messung erfolgt dabei über eine Reflexionsmessung. Eine Mehrzahl von Sensoren ist quer zur Papierbahn angeordnet und jeder Sensor sendet einen Messstrahl aus, der jeweils an einer anderen Stelle der Papierbahn reflektiert wird. Zum Kalibrieren der Vorrichtung ist ein Referenzteil vorgesehen, das in einer Querrichtung über der Papierbahn bewegt werden kann und so in die Messstrahlen der verschiedenen Sensoren gebracht wird.

Die automatische visuelle Inspektion von einfarbigen oder mehrfarbig gemusterten Oberflächen in der Produktionslinie ist Stand der Technik (siehe z.B. Massen, Robert: Oberflächeninspektion - die kapriziöse Königin der Bildverarbeitung, 15tes Heidelberger Bildverarbeitungsforum, 7.11.2001, www.bv-forum.de). Da diese Inspektion häufig in der Produktionslinie am bewegten Produkt erfolgt, werden oft Zeilenkamerasysteme eingesetzt. Wir beschreiben daher den Erfindungsgedanken dieser Anmeldung beispielhaft, aber nicht einschränkend, im folgenden am Beispiel von Zeilenkameras bzw. zeilenweise ausgelesenen Matrixkameras.

Abtastende Zeilenkameras bzw. abtastende Matrixkameras, die so verwendbar sind, dass nur jeweils eine oder wenige Zeilen ausgelesen werden, sind Stand der Technik und kostengünstig kommerziell erhältlich.

Insbesondere durch die seit kurzem verfügbaren sehr preiswerten Matrixkameras, bei welchen das Auslesen auf nur eine oder wenige Bildzeilen begrenzt werden kann, lassen sich zu niedrigen Kosten Zeilenkamera-Funktionen mit hohen Bildfrequenzen realisieren. So kann beispielsweise eine Bildmatrix-Kamera mit 1200 x 1200 Bildpunkten und einer Bild-Auslesefrequenz von 20 Bildern/sec durch Beschränkung des Auslesefensters auf nur eine einzige Bildzeile mit einer Fre-quenz von 1200 x 20 = 24.000 Zeilen/sec ausgelesen werden, einer Zeilenfrequenz, welche bisher nur sehr teuren Zeilenkameras vorbehalten war.

Um verlässliche und konstante Inspektionsergebnisse zu erhalten, ist es erforderlich, die geometrischen und/oder radiometrischen Eigenschaften der Kamera/Beleuchtungs-Anordnungen eines Oberflächeninspektionssystems zu kalibrieren.

Insbesondere in einer rauen Industrieumgebung mit wechselnden Umgebungstemperaturen, Staubablagerungen, Vibrationen u. Ä. ändern sich mit der Zeit unerwünscht sowohl die Eigenschaften der Beleuchtungselemente (Fluoreszenzröhren, Halogenstrahler, LED-Beleuchtungselemente usw.) als auch der Kameras (s/w und Farbkameras mit Matrix- oder Zeitenbildsensoren, spektral abgestimmte Kameras (UV-Bereich, NIR-Bereich)).

Es sind aus der Literatur bereits Vorschläge für die radiometrische und für geometrische Kalibrierung von Oberflächeninspektionssystemen bekannt.

So wird beispielsweise in der WO 93/25894 A2 (Grecon Greten GmbH &Co KG, Ernst Greten, Massen Robert) ein Verfahren für die radiometrische und die geometrische Kalibrierung von Oberflächeninspektionssystemen für längliche Holzprodukte beschrieben, wobei diese Holzstäbe von vier Kamera-/Beleuchtungssystemen rundum im Durchlauf inspiziert werden. Hierbei wird ein spezieller, mit Farbreferenzen und geometrischen Strichmustern markierter Referenzkörper von ähnlichen Abmessungen durch das Bildfeld dieser Zeilenkameras anstelle des zu inspizierenden Holzproduktes geschoben und abgetastet. Aus den Bildern dieser Referenzmarken werden Korrekturwerte für die radiometrische (Farb-)Kalibrierung und für die geometrische Kalibrierung berechnet. Jede der vier Kameras wird als eine Einheit begriffen, die zu kalibrieren ist.

Jede Kamera besteht aus einer Vielzahl von Sensoren und unterschiedliche Sensoren der Kamerasysteme erfassen bei dieser Anordnung unterschiedliche Flächen des Referenzkörpers. Bei Referenzflächen, die parallel zum Zeilensensor verlaufen, erfassen damit alle Sensoren jeweils unterschiedliche Teilflächen der gleichen Referenzfläche. Bei mangelnder Homogenität der Referenzfläche werden also die einzelnen Sensoren auf unterschiedliche Referenzen kalibriert. Referenzflächen, die quer zum Zeilensensor angeordnet sind, werden nur von einigen Sensoren erfasst. Dann muss die Kalibration einzelner Sensoren auf die anderen Sensoren, die diese Referenzfläche nicht erfasst haben, übertragen werden, was besonders im Randbereich der Kamera problematisch ist, da hier die Oberfläche aufgrund der Optik unter einem anderen Winkel betrachtet wird, was z.B. die Farbwahrnehmung beeinflusst.

Nachteilig ist bei diesem Verfahren auch, dass die übliche Produktinspektion unterbrochen werden und ein spezieller Referenzkörper auf das Transportband aufgelegt werden muss, der das Kamera-Bildfeld anstelle des üblichen Produktes durchläuft und danach wieder entfernt werden muss. Diese ProduktionsUnterbrechung sowie das manuelle Auflegen und Entfernen eines Referenzkörpers mag bei schmalen länglichen Holzprodukten noch tolerierbar sein, nicht aber bei bis zu 6000 mm breiten Holzplatten und ähnlichen breiten Produkten, wie sie beispielsweise bei der Herstellung von Fußböden und Möbel zu inspizieren sind.

Nachteilig ist ferner neben der schwierigen manuellen oder automatischen Handhabung auch die Herstellung und die Aufbewahrung eines solchen großen Referenzkörpers mit höchstgenauen farblichen und geometrischen Referenzen, die sehr teuer ist. Insbesondere die Farbreferenzen müssen innerhalb jeder Farbzone absolut genau, homogen und langzeitstabil sein. Es ist einleuchtend, dass dies umso schwieriger zu erreichen ist, als die Farbreferenz ausgedehnt ist.

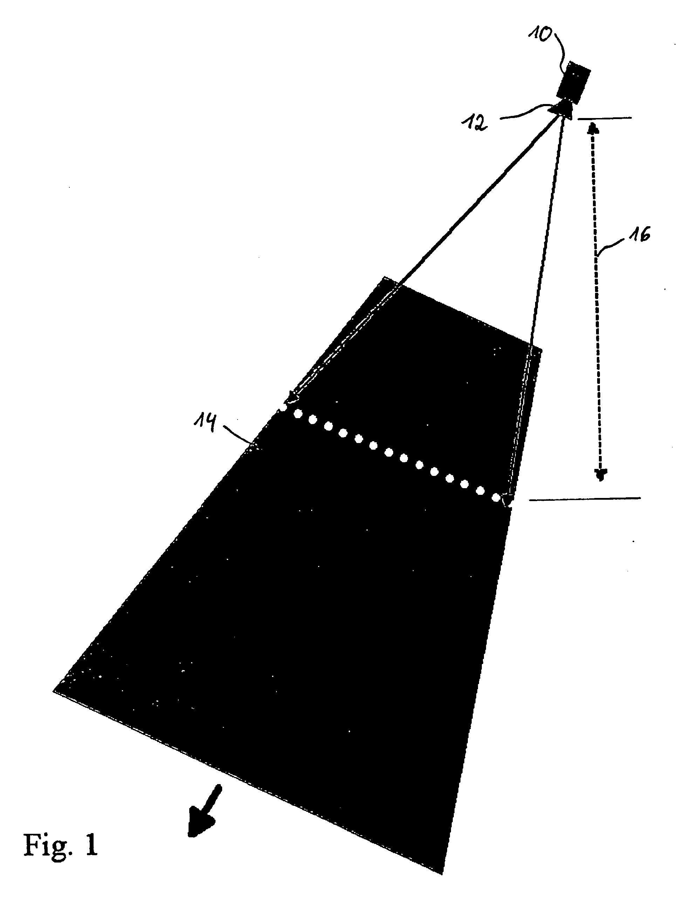

Zeilensensoren bzw. Zeilen von Matrixkameras sind in der Regel wenige Zentimeter lang. Die bildhafte Erfassung eines im Vergleich zu der Länge der Zeilensensoren großen Bildfeldes von bis zu etwa 600 Zentimetern, wie sie bei der Oberflächenkontrolle von Spanplatten, Holzpaneelen, Möbelfronten, Laminatfußböden usw. erforderlich ist, verlangt nach einem schwierigen technischen Kompromiss und der Wahl zwischen prinzipiell zwei Alternativen:
a) Es wird nach Figur 1 nur eine Zeilenkamera 10 mit vorgesetztem Objektiv 12 eingesetzt, welche eine zu inspizierende Oberfläche 14 aus einem großen Abstand 16 über die gesamte Produktbreite erfasst. Die Bildweite der Kamera, d.h. die größte Ausdehnung des Bildfeldes, ist gleich der Produktbreite.

Die Verwendung nur einer Kamera ist kostengünstig und die Sensoren innerhalb einer Kamera verhalten sich ähnlich, sie altern gleichzeitig und blicken durch die gleiche Optik. Eine Kalibration wie weiter oben aus dem Stand der Technik beschrieben, ist zwar sehr aufwändig, führt aber prinzipiell zu akzeptablen Ergebnissen.

Der Vorteil, nur eine Kamera zu benötigen, wird allerdings durch einen großen Beobachtungsabstand von typischerweise der Produktbreite erkauft, da bei kürzeren Abständen von der Kamera zur Produktoberfläche weitwinklige Abbildungsobjektive erforderlich sind. Weitwinklige Abbildungsobjektive wirken sich sehr negativ auf die Farbtreue über das gesamte Bildfeld aus, da die einzelnen Sensoren die Oberfläche unter unterschiedlichen Winkeln betrachten. Der große Arbeitsabstand erfordert in der Regel auch wesentlich aufwändigere Abbildungsoptiken, um eine ausreichende Bildschärfe über die gesamte Bildweite zu erreichen. Zudem kommt es zu einem Randabfall der Empfindlichkeit, um nur die wichtigsten Nachteile zu nennen.

Weiterhin sind solche aus großem Abstand eine bewegte Produktoberfläche beobachtende Kameras sehr anfällig für die in einer Transportstraße unvermeidlichen Vibrationen und dadurch bedingte Bildunschärfen. Es müssen daher sorgfältig konstruierte Aufbauten für die Kamera- und Beleuchtungshalterungen gewählt werden, was nur mit entsprechend hohem Aufwand möglich ist.

Damit sind scheinbar einfache 1-Kamera-Inspektionssysteme bzw. Inspektionssysteme, bei welchen sich nur wenige Kameras das Bildfeld teilen, in der Regel teure, großvolumige, optisch dichte Aufbauten, welche über der zu inspizierenden Produktbahn angeordnet werden und die Kameras und Beleuchtungselemente enthalten (siehe z.B. www.baumerinspection.com, ColourBrain® Inspektionsanlagen).

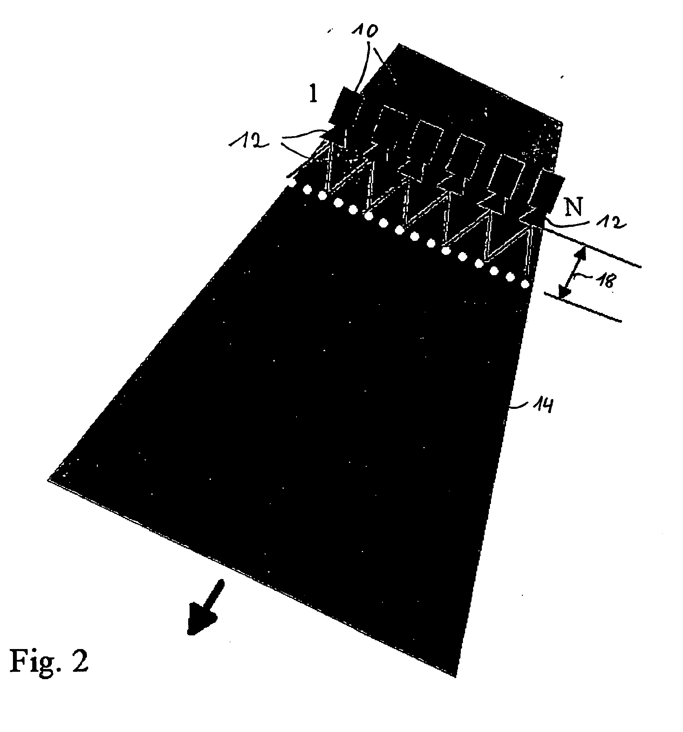

Insbesondere bei der Inspektion der Unterseite von Produkten wie Spanplatten, Tischlerplatten usw. macht diese hohe erforderliche Bauhöhe Schwierigkeiten, da der Produkttransport selten in der erforderlichen Höhe über dem Flur installiert ist und damit besondere Konstruktionen (beispielsweise mit optischen Spiegeln gefaltete Strahlengänge) eingesetzt werden müssen. Hierdurch verteuert sich diese Anlage erheblich, da Oberseite und Unterseite konstruktiv und optisch unterschiedlich ausgelegt werden müssen.
b) Werden dagegen als zweite Alternative gemäß Figur 2 eine große Anzahl N Kameras 10, die jeweils mit einem Objektiv 12 versehen sind, verwendet, so können diese in einem kleinen Abstand 18 über der Produktoberfläche 14 angebracht werden. Der Abstand entspricht wiederum in etwa der Bildweite jeder Kamera, je mehr Kameras verwendet werden, desto kleiner ist die bei jeder Kamera erforderliche Bildweite und entsprechend geringer ist der notwendige Abstand. Dieser Ansatz erlaubt daher eine vorteilhafte geringe Bauhöhe.

Die Anfälligkeit für Vibrationen verringert sich drastisch mit dem Bildabstand; es können einfachere und kostengünstigere Objektive eingesetzt werden.

Allerdings gibt es bei dieser Alternative N verschiedene Kameras, die durch N verschiedene Optiken schauen. Die Abweichung zwischen den einzelnen Sensoreigenschaften ist wesentlich größer als innerhalb einer Kamera und die oben vorgestellte Kalibration aus dem Stand der Technik wird auch im Ergebnis völlig inakzeptabel, da die Sensoren unterschiedlich wegdriften und die Kalibrierung auf eine Farbe mit einigen Sensoren beispielsweise der dritten Kamera überhaupt nicht auf die Sensoren beispielsweise der N-ten Kamera übertragbar sind.

Es wäre daher von hohem wirtschaftlichen und technischen Vorteil, insbesondere zeilenweise abtastende Oberflächeninspektionssysteme zu konzipieren, die mit einer großen Anzahl N von dicht über der zu inspizierenden Oberfläche angebrachten Kameras mit N aneinanderstoßenden bzw. sich leicht überlappenden Bildfenstern arbeiten und durch entsprechende Maßnahmen die gleiche Bildgüte erreichen, wie sie nach dem bisherigen Stand der Technik nur mit einem Bildgeber oder einigen wenigen, aus einer großen Entfernung die Produkte vorzugsweise zeilenweise erfassenden Bildgebern erreicht wird. Hierzu muss kostengünstig der "Gleichlauf" aller dieser N Kameras erreicht werden.

Wir bezeichnen im Rahmen dieser Anmeldung mit dem aus der Mechanik entlehnten Begriff "Gleichlauf" von N Kameras alle diejenigen radiometrischen und geometrischen Kalibrier- und Einrichtverfahren, welche erforderlich sind, um die N Bildsignale von N aneinander gereihten Kameras mit zusammen N Bildfeldern mit der im wesentlichen gleichen Qualität zu erzeugen, wie es mit einer einzigen Kamera mit einer entsprechend N-fachen Auflösung und einem N-fach größeren Bildfeld möglich ist. Dabei können die N Kameras wesentlich dichter an der Produktoberfläche angeordnet sein als die eine Kamera.

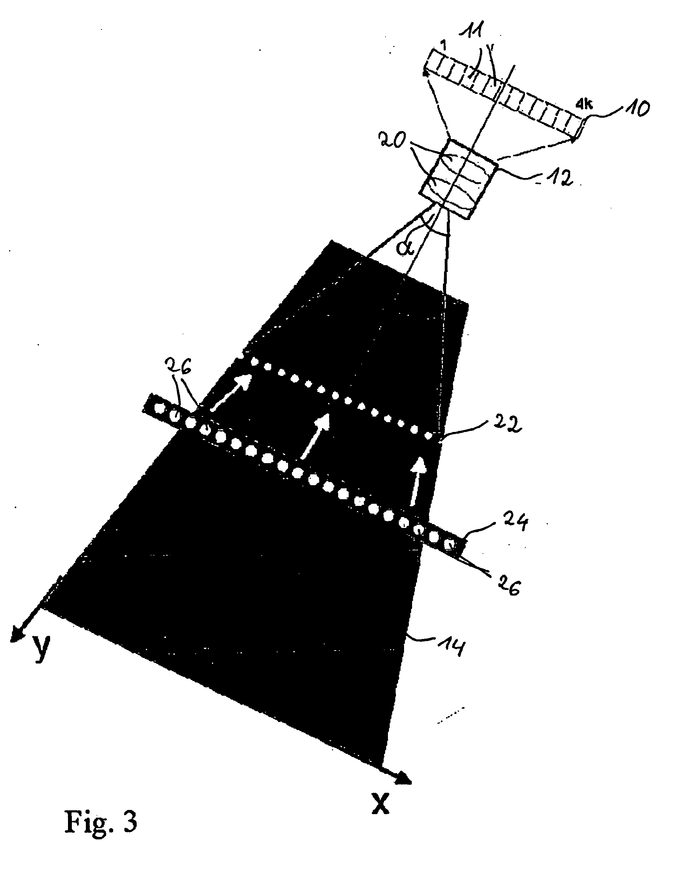

Figur 3 zeigt wie auch Figur 1 eine Produktoberfläche 14, die von einer Kamera 10 mit vorgeschalteter Optik 12 betrachtet wird. Die Kamera 10 ist schematisch durch eine Zeile von Sensorbildpunkten 11 mit Bildpunkten 1 bis 4000 (=4k) dargestellt. In der Optik 12, bzw. dem Objektiv 12 sind schematisch zwei Linsen 20 angedeutet. Anhand von Figur 3, welche den Stand der Technik wiedergibt, lassen sich die wichtigsten radiometrischen und geometrischen Eigenschaften erklären, welche für den "Gleichlauf" von N Kameras wichtig sind, da sie Fehlerquellen bei der Bildauswertung darstellen:
a) Ein Bildfeld 22, das durch weiße Punkte schematisiert ist und sich über die gesamte Produktbreite erstreckt, wird durch die Zeilenkamera 10 erfasst. Eine Lichtquelle 24, die aus einer großen Zahl von LED's 26 zusammengesetzt ist und welche in der Regel keinen absolut konstanten Intensitätsverlauf und kein konstantes Farbspektrum aufzeigt, beleuchtet das Bildfeld 22. Bei einer derartigen Linienbeleuchtung sind sowohl durch Produktionstoleranzen als auch durch Toleranzen beim Zusammenbau deutliche Änderungen der Helligkeit und des Farbspektrums über die Bildweite, d.h. in Richtung der angegebenen x-Koordinate unausweichlich.
b) Das abbildende Objektiv 12 verursacht chromatische Verzerrungen, die von einem Betrachtungswinkel α abhängen, einen von α abhängigen Intensitätsabfall, eine von α abhängige Bildschärfe sowie einen von α abhängigen lokalen Abbildungsmaßstab.
c) Die einzelnen Bildpunkte 11 des Zeilensensors 10 haben eine unterschiedliche Empfindlichkeit (PNU = pixel non-uniformity), einen unterschiedlichen Dunkelstrom und unterschiedliches Dunkelstromrauschen (BNU = black noise uniformity). Bei mit Farbfilter abgedeckten Sensorbildpunkten sind Schwankungen in den Eigenschaften der aufgedampften Farbfilter unvermeidlich.

Die aufgezählten Schwankungen unter a) bis c) treten bereits zwischen Sensoren einer Kamera auf. Die Schwankungsbreite zwischen Sensoren unterschiedlicher Kameras ist deutlich höher.

Hinzu kommen Fehlerquellen, die spezifisch sind für den Einsatz von vielen Kameras. So müssen die Zeilensensoren genau auf einer Linie ausgerichtet und nicht gegeneinander verkippt sein. Damit erfordert ein "Gleichlauf" von N Kameras eine große Anzahl von Einricht- und Kalibrierprozeduren für jede der N Kameras:
1. Eine genaue geometrische Ausrichtung im Raume aller N Kameras, so dass die Bildfelder der einzelnen Kameras genau auf einer Linie quer zur Produktbahn liegen.
2. Eine genaue Verkippung aller Kameras bzw. die genaue Kenntnis der Verkippung der einzelnen N Kameras, damit bildpunktweise die geometrische Verzerrung quer zur Produktbahn korrigiert werden kann.
3. Eine genaue Kenntnis aller Fehler, welche vom Betrachtungswinkel α abhängen, insbesondere der chromatischen Verzerrung, der Bildschärfe, des Randabfalls, des lokalen Abbildungsmaßstabs.
4. Eine genaue Kenntnis aller Fehler, welche vom Sensor-Bildpunkt abhängen (Farbfilter, PNU, BNU etc.).
5. Eine genaue Kenntnis aller Fehler, welche von der Beleuchtung abhängen und damit bei Zeilensensoren ebenfalls eine Funktion des Betrachtungswinkel α für jede der N Kameras sind.

Der Begriff "Gleichlauf" hat aber im Rahmen dieser Anmeldung zusätzlich eine zeitliche Komponente. Durch äußere Einflüsse wie Temperaturschwankungen, Vibrationen, Alterungen usw. können sich praktisch alle o. g. Einflüsse mit der Zeit ändern. Es ist daher erforderlich, nicht nur einmalig (beispielsweise bei der Einrichtung eines Inspektionssystems bestehend aus N Kameras) diesen Gleichlauf herzustellen, sondern diesen Gleichlauf in kürzeren Zeitintervallen zu überprüfen und ggf. wieder sicherzustellen.

Die große Anzahl von für die Herstellung des Gleichlaufs erforderlichen Referenzen und Kaliber muss wiederum selbst vor äußeren Einflüssen wie Lichtalterung, Staubablagerung usw. geschützt werden, während sie nicht für die ReKalibrierung benötigt werden. Es ist bekannt, dass für die ausreichend genaue radiometrische Kalibrierung von Farbsensoren mindesten 60 bis 200 hochgenaue und langzeitstabile Farbreferenzen benötigt werden. Zusammen mit den geometrischen Referenzen und Einrichthilfen müssen daher ca. 80 bis 220 Referenzen vorgesehen werden.

Damit ist klar erkennbar, dass der technische und wirtschaftliche Vorteil eines Inspektionssystems, welches ein Produkt mit einer großen Anzahl von N nebeneinander angeordneten Kameras aus einer geringen Entfernung erfasst, anstatt das Produkt aus großer Entfernung mit nur einer oder wenigen Zeilenkameras zu inspizieren, nur dann zum Tragen kommt, wenn es gelingt, den komplexen Vorgang der Sicherstellung des Gleichlaufs einfach und schnell und vorzugsweise vollautomatisch durchzuführen. Dies ist bis zum heutigen Tag noch nicht erreicht worden.

Es ist aus dem Stand der Technik kein wirtschaftliches, schnelles, genaues und automatisch ablaufendes Verfahren und keine Anordnung zur Durchführung des Verfahrens bekannt, um mit einer Anordnung von N in kleiner Entfernung über einer zu inspizierenden Produktoberfläche angebrachten, insbesondere zeilenweise abtastenden Bildsensoren einen Gleichlauf aller dieser Sensoren zu erreichen und damit eine Bildqualität zu liefern, wie sie nach dem Stand der Technik nur mit einem wesentlich größeren Bauvolumen des Inspektionssystems, der Verwendung hochauflösender bis höchstauflösender Zeilenkameras und entsprechend hochqualitativen Abbildungsoptiken erreicht wird.

Die Aufgabe wird durch das Verfahren gemäß Anspruch 1 und die Anordnung gemäß Anspruch 7 gelöst.

Das Verfahren gemäß Anspruch 1 umfasst den Schritt der Bereitstellung einer Anzahl M von Referenzeinheiten, wobei jede der Referenzeinheiten eine Breite aufweist, so dass jede Referenzeinheit nur jeweils von wenigen Sensorbildpunkten eines Bildgebers gleichzeitig erfasst werden kann. Kleine Farbreferenzen lassen sich wesentlich kostengünstiger erzeugen als großflächige, bei welchen die kolorimetrische Homogenität nicht einfach zu erreichen ist.

Bevorzugter Weise wird die Anzahl M von Referenzeinheiten bei der Kalibration dicht über der zu inspizierenden Oberfläche durch die Bildfelder der N Bildgeber so bewegt, dass im wesentlichen jeder zu kalibrierende Sensorbildpunkt jeder der N Bildgeber das Referenzmuster im wesentlichen jede der M Referenzeinheiten mindestens einmal erfasst. Es wird also jeder Sensorbildpunkt von allen Bildgebern mit jeder Referenz individuell kalibriert. Dadurch, dass die einzelnen Referenzen schmal und leicht sind, lassen sie sich auch mechanisch genau, schnell und gleichmäßig motorisch bewegen. Sie können außerdem knapp über der Oberfläche bewegt werden, so dass die gleichen Lichtverhältnisse wie auf der Oberfläche herrschen und die Bildschärfe der einzelnen Optiken für die Oberfläche kalibriert werden kann.

Es wird ein zweidimensionales Bild nach Durchlauf der Referenzeinheiten für jeden der N Bildgeber gebildet, welches die M Referenzeinheiten während des Transportes durch das Bildfeld des abtastenden Bildgebers darstellt. Aus den so aufgenommenen N zweidimensionalen Bildern werden die für die individuelle Bildpunkt-genaue geometrische und radiometrische Einrichtung und/oder Kalibrierung notwendigen Parameter abgeleitet.

Bevorzugter Weise werden mit Hilfe dieser Parameter die N Bildgeber eingerichtet und/oder kalibriert.

In einer bevorzugten Ausführungsform werden die bei der Kalibrierung anfallenden Daten protokolliert und angezeigt sowie mit einstellbaren Toleranzen verglichen. Das erlaubt es, die zeitliche Stabilität und das absolute Maß der verschiedenen geometrischen und radiometrischen Abweichungen des Inspektionssystem zusammen mit dem SOLL-Zustand dem Anwender anzuzeigen.

Bewegen sich die gemessenen Abweichungen innerhalb der Toleranz, so können die gemessenen geometrischen und radiometrischen Abweichungen durch ein entsprechendes in einem Rechenprogramm realisiertes Kalibrierverfahren automatisch korrigiert werden:
- Korrektur der geometrischen Eigenschaften wie Objektiwerzerrung, Verkippung des Bildgebers durch lokale Interpolation und Abtastung.
- Korrektur der radiometrischen Eigenschaften wie Farbkonstanz durch Farb-Kalibrierung jedes Bildpunktes aller Bildgeber.

Diese Verfahren sind dem Fachmann der Bildverarbeitung bekannt.

Vorzugsweise wird beim Überschreiten der Toleranzen ein Warnsignal erzeugt.

Bewegen sich die gemessenen Abweichungen außerhalb des Toleranzbereiches, so deutet dies auf anormale Ereignisse hin, welche durch Reparaturen wie mechanisches Nachjustieren der Raumlage eines Bildgebers, eines Objektivs, Ersatz einer Beleuchtungsquelle usw. behoben werden können. Daher wird in einer bevorzugten Ausführungsform die automatische Kalibrierung nur vorgenommen, wenn die Toleranzen nicht überschritten wurden.

Die Anordnung gemäß Anspruch 7 umfasst eine Vielzahl N von Bildgebern, welche die zu inspizierende Oberfläche jeweils mit einer Vielzahl von Sensorbildpunkten objektbildpunktweise abtasten können. Die N Bildgeber sind so angeordnet, dass sich ihre N Bildfelder aneinander anschließen oder mit wenigen Bildpunkten überlappen und zusammen die gesamte Breite der zu inspizierenden Oberfläche abdecken. Die N Bildgeber sind in einem Abstand von der Oberfläche angeordnet, der in etwa der größten Breite eines der N Bildfelder entspricht.

Eine Anzahl M von Referenzeinheiten ist vorgesehen, wobei jede der Referenzeinheiten ein unterschiedliches radiometrisches und/oder geometrisches Referenzmuster aufweist und eine Breite hat, so dass jede Referenzeinheit nur jeweils von wenigen Sensorbildpunkten eines Bildgebers gleichzeitig erfasst werden kann. Die Referenzeinheiten sind also sehr klein.

Die Anordnung umfasst ferner eine motorisch angetriebene Transporteinrichtung, welche die M Referenzeinheiten knapp über der zu inspizierenden Oberfläche durch die Bildfelder der N Bildgeber mit konstanter aber im Vergleich zur Auslesefrequenz der Bildgeber niedrigen Geschwindigkeit bewegen und die M Referenzeinheiten in eine Parkposition verbringen kann, die sich außerhalb der Bildfelder der N Bildgeber befindet. Die Transporteinrichtung übernimmt damit zwei Funktionen, das Einbringen der Referenzeinheiten in die Bildfelder der N Bildgeber aus der Parkposition heraus und das Bewegen der Referenzeinheiten so, dass alle Sensorbildpunkte jede der Referenzeinheiten erfassen kann.

Eine Recheneinheit setzt die während des Durchlaufs der M Referenzeinheiten durch die N Bildfelder jedes der N Bildgeber erzeugten Bildsignale zu jeweils einem 2-dimensionalen Bild zusammen, welches die Referenzeinheiten während des Durchlaufs durch das Bildfeld jeder der N Zeilenkameras zeigt.

Kalibrationsprogramme, die auf der Recheneinheit lauffähig sind, können aus den aufgenommenen N zweidimensionalen Bildern die für die individuelle Bildpunkt-genaue geometrische und radiometrische Einrichtung und/oder Kalibrierung notwendigen Parameter berechnen und die N Bildgeber so kalibrieren, dass sie sich geometrisch und radiometrisch verhalten wie ein einzelner oder eine kleine Anzahl von Bildgebern mit einer Anzahl von Sensorbildpunkten, die der Summe der Sensorbildpunkte der N Bildgeber entspricht. Damit sieht der Anwender nicht mehr die verschiedenen Kameras. Die weitere Auswertung der während des Inspektionsbetriebes erhaltenen Bilddaten kann in der gleichen Form erfolgen, als würde es sich um Bilddaten handeln, die von einer Kamera stammen.

Die Verwendung einer Vielzahl benachbarter, vorzugsweise zeilenförmig abtastender Bildgeber ermöglicht den Aufbau eines preiswerten Inspektionssystems niedriger Bauhöhe, denn der Abstand von der zu inspizierenden Oberfläche wird durch die Bildweite einer der Kameras vorgegeben, die nur ein Bruchteil der Bildweite einer einzelnen, die gesamte Produktbreite erfassenden Kamera ausmacht. Die Anforderungen an die Bildgeber sind gering, d.h. es können einfache Optiken und Kameras aus der Massenproduktion verwendet werden. Die große Zahl preiswerter und von den Abmessungen her kleiner geometrischer und radiometrischer Referenzen kann mit einem moderaten technischen Aufwand (ein motorischer Lineartransport) durch die Bildfelder aller n Zeilenkameras hindurch bewegt werden. Damit werden alle für den vollständigen, d.h. für jeden Betrachtungswinkel α und jeden Sensorbildpunkt der N Bildgeber sowie für den Verbund aller N vorzugsweise zeilenförmig abtastenden Bildgeber "Gleichlauf" relevanten Parameter in einem automatischen und schnellen, den normalen Inspektionsbetrieb nur kurzzeitig unterbrechenden Vorgang ermittelt.

Weitere vorteilhafte Ausgestaltungen sind den Unteransprüchen zu entnehmen und werden aus der nachstehenden Beschreibung bevorzugter Ausführungsformen deutlich.

Hierbei werden folgende Abbildungen verwendet:
Figuren 1 bis 3 zeigen schematisch Inspektionssysteme aus dem Stand der Technik;
Figur 4 zeigt in einer dreidimensionalen leicht schematisierten Darstellung eine erfindungsgemäße Anordnung;
Figur 5 zeigt in einer Seitenansicht konstruktive Details der erfindungsgemäßen Anordnung;
Figur 6 zeigt aneinandergereiht einen Ausschnitt aus N zweidimensionalen Bilder, die beim Durchlauf der Referenzeinheiten gebildet wurden;
Figur 7 zeigt beispielhaft eine geometrische Referenz mit erläuternden Diagrammen zur Kalibrierung der Bildschärfe sowie zur Ausmessung und Kompensation durch Objektiwerzerrungen bewirkter lokaler Abbildungsfehler;
Figur 8 zeigt beispielhaft eine geometrische Referenz, welche zum genauen Ausrichten aller N Zeilenkameras quer zur Produktbahn dient;
Figur 9 zeigt beispielhaft eine große Zahl von sehr kleinen Farbreferenzen, welche zur Kalibrierung des radiometrischen Gleichlaufs dienen;
Figur 10 zeigt schematisch eine erfindungsgemäße Anordnung zum Transport der Referenzeinheiten bei einem System für die beidseitige Inspektion einer Produktoberfläche.

Der Erfindungsgedanke soll beispielhaft an der bevorzugten, aber nicht ausschließlichen Anwendung einer Oberflächeninspektion in der Produktionslinie durch eine Vielzahl von in geringer Höhe über der zu inspizierenden bewegten Oberfläche angeordneten Zeilenkameras verdeutlicht werden.

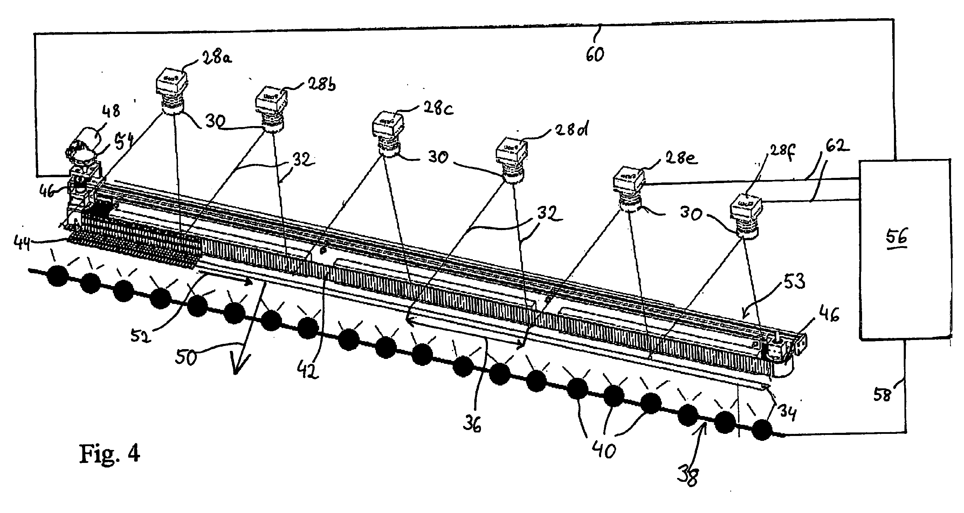

Figur 4 zeigt eine Anordnung mit sechs Bildgebern 28a bis 28f. Die Bildgeber 28 sind im Ausführungsbeispiel farbtüchtige Zeilenkameras, welche jeweils über einen eigenen Zeilensensor mit einer Vielzahl von Sensorbildpunkten und eine abbildende Optik 30 verfügen. Die einzelnen Bildfelder der Bildgeber 28 sind länglich und jeweils schematisch durch Linien 32 begrenzt. Sie schließen aneinander an oder überlappen sich leicht um sicherzustellen, dass jeder Ort der Produktoberfläche erfasst wird. Zusammen erfassen sie bildgebend eine Objektzeile 34, die sich über die gesamte Produktbreite erstreckt. Das Produkt selbst, dessen Oberfläche inspiziert wird, ist in Figur 4 nicht dargestellt. Der Abstand der Bildgeber 28 zur Produktoberfläche, die durch die Objektzeile 34 gezeigt ist, entspricht etwa der jeweiligen Bildweite 36 einer Kamera. Eine linienförmige Beleuchtungseinrichtung 38, die aus einer großen Zahl von einzelnen, dicht benachbarten LED's 40 (Licht emittierenden Dioden) besteht, beleuchtet die Objektzeile. Auch eine andere Form der Beleuchtungseinrichtung ist möglich.

An einem Band 42 ist eine große Zahl zwischen rund 80 und 220 von sehr kleinen geometrischen und radiometrischen Referenzeinheiten 44 befestigt. Das Band, vorzugsweise in Form eines Riemenantriebs, kann über zwei Rollen 46 mittels eines Motorantriebs 48 bewegt werden. Im dargestellten Ausführungsbeispiel bewegt sich das Produkt mit der zu inspizierenden Oberfläche entlang eines Pfeils 50, während die Referenzeinheiten 44 mit dem Band 42 entlang eines Pfeils 52 bewegt werden können. In der Darstellung in Figur 4 befinden sich die Referenzeinheiten 44 im Bildfeld des Bildgebers 28a. Die Referenzeinheiten 44 können weiter quer zum Produkttransport durch die Bildfelder der sechs Bildgeber 28a bis 28f bewegt werden und dann in eine Parkposition 53, die sich außerhalb der Bildfelder der Bildgeber 28 befindet. Ein Positionsgeber 54 am Motorantrieb 48 erlaubt eine genaue Bestimmung der jeweiligen Position der Referenzeinheiten.

Die Umlaufbahn der Referenzeinheiten 44 besteht damit aus zwei Strecken:
a) der eigentlichen Kalibrierstrecke, bei welcher sich die Referenzeinheiten 44 durch die Bildfelder der einzelnen Zeilenkameras 28 bewegen und von den Zeilenkameras bildhaft erfasst werden und während dieser Erfassung die zu inspizierende Produktoberfläche verdecken, und
b) einer sogenannten Parkstrecke, bei welcher sich die Referenzeinheiten 44 außerhalb der Bildfelder der Zeilenkameras 28 befinden und damit die zu inspizierende Produktoberfläche für die Inspektion freigeben.

Der Kalibriervorgang, während dem sich die Referenzeinheiten 44 durch die Bildfelder der einzelnen Zeilenkameras 28 bewegen, benötigt nur eine kurze Zeit in der Größenordnung weniger Sekunden, sodass die laufende Inspektion kaum unterbrochen wird.

Die Anordnung umfasst ferner eine Steuer- und Recheneinheit 56, auf der Kalibrationsprogramme laufen. Die Steuer- und Recheneinheit 56 ist über eine Leitung 58 mit der Beleuchtungseinrichtung verbunden und über eine Leitung 60 mit dem Motorantrieb 48 und dem Positionsgeber 54. Alle Bildgeber 28 sind ebenfalls mit der Steuer- und Recheneinheit 56 verbunden, was nur für die Bildgeber mit den Nummern 5 und 6 durch Leitungen 62 angedeutet ist.

Während der visuellen Oberflächeninspektion befinden sich die Referenzeinheiten 44 in der Parkposition 53 und die Bildgeber 28 werden in bekannter Weise von der Rechen- und Steuereinheit 56 so gesteuert, dass ihre Sensorbildpunkte die zu inspizierende Oberfläche abtasten. Für eine Kalibrierung der Vorrichtung wird zu einem beispielsweise durch das Steuerprogramm vorgegebenen Zeitpunkt oder durch ein externes Signal, z.B. manuell der Kalibrierprozess ausgelöst, wodurch die Referenzeinheiten 44 durch die Bildfelder der Bildgeber 28 bewegt werden. Die Bewegung erfolgt so, dass im Wesentlichen jeder zu kalibrierende Sensorbildpunkt jeder der Bildgeber 28 das Referenzmuster im Wesentlichen jeder der Referenzeinheiten 44 mindestens einmal erfasst. Die Referenzeinheiten 44 sind so angeordnet, dass sie sich knapp über der Oberfläche, die zu inspizieren ist, bewegen. Während des Kalibrationsvorgangs überdecken sie jeweils stellenweise diese Oberfläche. Die Bildgeber tasten wie zuvor sensorbildpunktweise ab, erfassen jetzt aber die Referenzeinheiten 44. Die Bewegung der Referenzeinheiten erfolgt durch den Motorantrieb 48, und zwar langsam im Vergleich zur Zeilenperiode der Zeilenkameras 28.

In einer bevorzugten Ausführungsform ist an einer leicht zugänglichen Stelle des Referenzeinheiten-Transportsystems mindestens eine Aufnahmeeinrichtung für ein externes kalibriertes Messgerät wie ein Fotospektrometer oder ein Kolorimeter angebracht, beispielsweise in der Nähe des Motorantriebs 48. Die geometrischen und/oder radiometrischen Referenzeinheiten können dann ohne mechanischen Ausbau an dem externen Messgerät vorbeibewegt und dabei in situ nachkalibriert und überprüft werden. Vorzugsweise wird für die Kontrolle der Unversehrtheit der Oberfläche aller Referenzeinheiten von Beschädigungen (Kratzer etc.) und Staub sowie für die Kontrolle der aus Strichmuster und graphischen Elementen bestehenden geometrischen Referenzen eine Messkamera als externes Messgerät eingesetzt.

Statt eine Aufnahmevorrichtung vorzusehen, können diese Prüfsysteme alternativ fest an dem Transportsystem angebaut sein, so dass die geometrischen und radiometrischen Referenzen selbst automatisch zu beliebigen Zeiten nachgeprüft werden können.

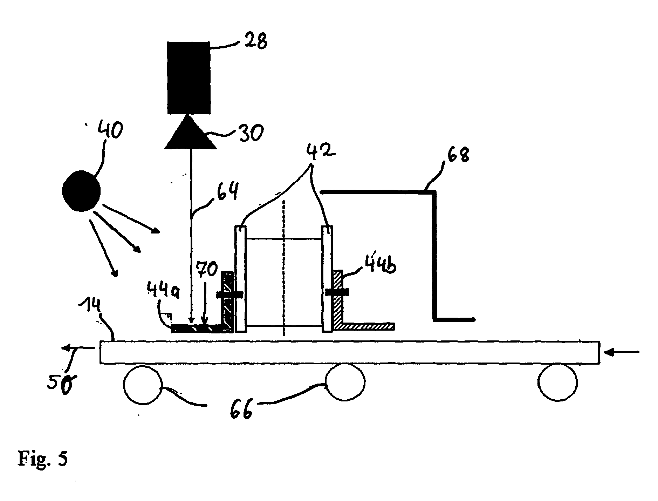

Figur 5 zeigt die erfindungsgemäße Anordnung schematisch in einer Seitenansicht. Gleiche Teile in Figuren 4 und 5 werden mit gleichen Referenzzeichen bezeichnet. Ein Bildgeber 28 mit einer abbildenden Optik 30 betrachtet im Wesentlichen senkrecht eine zu inspizierende Oberfläche 14, was durch einen Pfeil 64 angedeutet ist. Eine LED 40 beleuchtet die Oberfläche. Die zu inspizierende Oberfläche wird in Richtung eines Pfeils 50 bewegt. Dazu ist das Produkt in an sich bekannter Weise auf Rollen 66 gelagert. Eine Referenzeinheit 44a ist in einer Position gezeigt, in der sie vom Bildfeld des Bildgebers 28 erfasst wird. Eine Referenzeinheit 44b ist in ihrer Parkposition dargestellt. In der Regel befinden sich die Referenzeinheiten entweder auf der Kalibrierstrecke und werden von den Bildgebern erfasst oder sie befinden sich in der Parkposition. Je nach konstruktivem Aufbau ist es aber auch möglich, dass sich bereits einige Referenzeinheiten in der Parkposition befinden, während einige Referenzeinheiten 44 noch von einem Bildgeber oder auch mehreren Bildgebern erfasst werden. Die Referenzeinheiten 44a, 44b sind an einem Riemen 42 befestigt. Schematisch angedeutet ist eine Abdeckung 68 über der Parkposition, mit der die Referenzeinheiten vor Staub und Licht geschützt werden, solange sie sich in der Parkposition befinden. Die Abdeckung schützt die Referenzeinheiten gegen Verschmutzung, Staub und vor dem zu einer beschleunigten Alterung insbesondere der Farbreferenzen führenden Licht der intensiven Beleuchtungseinrichtung 38. Damit kann ein Ausbau der Referenzeinheiten und ein separates Verstauen vermieden werden.

Bei dem Band 42 handelt es sich vorzugsweise um einen Zahnriemen. Die vielen kleinen Referenzeinheiten sind daran vorzugsweise so befestigt, dass sie einzeln abnehmbar und austauschbar sind. Die dem Bildgeber 28 zugewandte Oberfläche 70 trägt die zur geometrischen und radiometrischen Kalibrierung benötigten Marken, welche weiter unten erklärt werden.

Es sind Anordnungen möglich, bei denen die nebeneinander angeordnete Kameras in Wellenlängenbereichen betrieben werden, welche außerhalb des sichtbaren Lichtes liegen, wie beispielsweise das nahe Infrarot (NIR) oder das ferne Infrarot (IR) oder der ultraviolette Bereich (UV). Dann werden Referenzeinheiten verwendet, welche in diesen Wellenlängenbereichen optisch wirksam sind.

Die nebeneinander angeordneten Kameras können auch für die Polarisation des empfangenen Lichtes empfindlich sein; entsprechend sind dann zumindestens ein Teil der geometrischen und radiometrischen Referenzen solche, welche die Polarisation des reflektierten oder transmittierten Lichtes in einer definierten Weise beeinflussen.

Neben der Verwendung von Zeilenkameras mit nur einer einzigen Bildzeile können auch solche zum Einsatz kommen, welche mehrere benachbarte Bildzeilen verwenden. Solche Zeilensensoren sind dem Fachmann der Bildverarbeitung bekannt als tri-lineare Farbzeilen oder als multi-sensorielle Zeilen (z.B. 3 Farbzeilen + eine NIR Zeile).

Auch 3D Zeilenkameras können verwendet werden, wobei hierbei neben den noch ausführlicher beschriebenen geometrischen und radiometrischen Referenzen mindestens einige 3D Referenzeinheiten vorhanden sind. Diese können beispielsweise durch ein Plättchen mit einer in Richtung der Abtastung verlaufenden Höhenstufe (stufenförmiger Höhenverlauf) realisiert werden oder aber durch einige Plättchen mit einer jeweils unterschiedlichen Stärke, sodass die Entfernung vom Bildgeber zum Referenzplättchen in einer definierten Weise verändert wird.

Auch sogenannte scatter-Zeilenkameras, welche den Lichthof-Effekt ausnützen (siehe z.B. Robert Massen: Oberflächeninspektion durch Auswertung des Lichthof-Effektes, 26tes Heidelberger Bildverarbeitungsforum, 26. November 2004, Herausgeber. Prof. B. Jaehne, AEON Verlag), können verwendet werden. In diesem Fall werden mindestens einige Referenzeinheiten so ausgelegt, dass sie aufgrund von interner optischer Streuung und Rückstreuung einer aufprojizierten Lichtmarke einen Lichthof mit bekannten Eigenschaften erzeugen.

Ferner ist die Verwendung von zeilenweise ausgelesenen Flächensensoren (Matrixkameras) denkbar, bei welchen sich das Auslesefenster auf wenige Sensorzeilen der Sensormatrix beschränkt. In diesem Fall sind die geometrischen und radiometrischen Referenzen so auszulegen, dass sie von allen diesen Sensorzeilen beobachtet und damit kalibriert werden können. Die geometrischen und radiometrischen Referenzen enthalten dann für jede oder einige dieser Sensorzeilen eigene Referenzzonen, welche auf die geometrischen und radiometrischen Eigenschaften der unterschiedlichen Sensorzeilen angepasst sind.

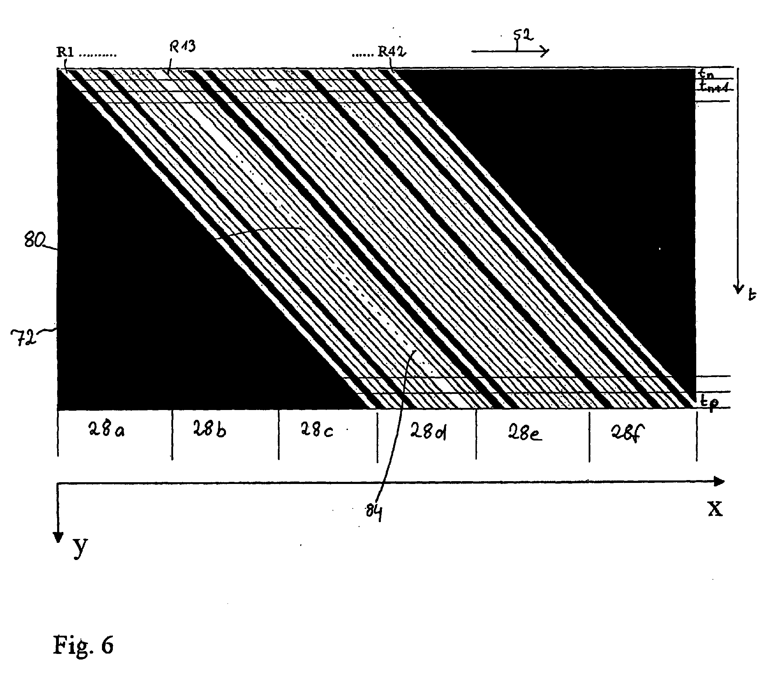

Wie bereits weiter oben erläutert, werden während der Kalibrierphase die Referenzeinheiten 44 durch alle Bildfelder der Bildgeber 28 mit einer im Vergleich zur Zeilenperiode der Bildgeber langsamen Bewegung motorisch bewegt. Aus den so gewonnenen Abtastpunkten wird nach Durchlauf der Referenzeinheiten 44 für jeden der sechs Bildgeber 28 ein zweidimensionales Bild erstellt, welches die M Referenzeinheiten während des Transportes durch das jeweilige Bildfeld darstellen. Ein derartiges zweidimensionales Bild ist ausschnittsweise in Figur 6 dargestellt.

Figur 6 zeigt einen Ausschnitt 72 aus dem gebildeten zweidimensionalen Bild für alle Bildgeber 28a bis 28f. In Richtung der X-Achse sind Referenzeinheiten R1 bis R42 aufgetragen, wobei ein Pfeil 52 die Bewegungsrichtung der Referenzeinheiten während der Kalibrierphase darstellt. In Richtung der negativen Y-Achse ist die Zeit t aufgetragen. Die Referenzeinheiten sind hier lediglich als weiße oder schwarze Flächen dargestellt, die tatsächlich verwendeten Referenzeinheiten werden in den folgenden Figuren noch erläutert. Sie bilden in dem Bild diagonale Streifen. Jede einzelne Diagonale im Bildausschnitt 72 zeigt also eine Referenzeinheit, die jeweils von anderen Sensorbildpunkten erfasst werden, wobei es sich bei den Sensorbildpunkten um Sensorbildpunkte verschiedener Kameras handelt bzw. handeln kann. Dank der Rechen- und Steuereinheit 56, die sowohl mit den einzelnen Bildgebern als auch mit dem Positionsgeber 54 verbunden ist, kann jeder einzelne Bildpunkt auf dem zweidimensionalen Bild eindeutig einem Sensorbildpunkt einer Kamera zugeordnet werden.

Zu einer Zeit tₙ in der obersten Zeile des Bildes werden beispielsweise die Referenzeinheiten R1 bis R13 von den Sensorbildpunkten des Bildgebers 28a erfasst. Die Sensorbildpunkte der Bildgeber 28b und 28c erfassen ebenfalls Referenzeinheiten. Vom Bildgeber 28d erfassen zur Zeit tₙ nur einige Sensorbildpunkte eine Referenzeinheit. Die Bildgeber 28e und28f erfassen zu diesem Zeitpunkt noch die Oberfläche 14 des zu inspizierenden Produktes.

Zur Zeit tₙ₊₁, d.h. beim nächsten Zeilendurchlauf sind die Referenzeinheiten R1 bis R42 in Richtung des Pfeils 52 weiter bewegt worden. Daher erfasst der am weitesten links liegende Sensorbildpunkt des Bildgebers 28a keine Referenzeinheit mehr, während beim Bildgeber 28d jetzt mehr Sensorbildpunkte eine Referenzeinheit erfassen. Zum Zeitpunkt tₚ erfassen die Bildgeber 28a und 28b keine Referenzeinheiten mehr, während Bildgeber 28c noch eine Referenzeinheit, nämlich R1 erfasst. Ein Kalibriervorgang bzw. ein Kalibrierdurchlauf beginnt in dem Moment, in dem Referenzeinheit R42 vom am weitesten links sitzenden Sensorbildpunkt des Bildgebers 28a erfasst wird, bis zum dem Zeitpunkt, zu dem Referenzeinheit R1 von dem am weitesten rechts sitzenden Sensorbildpunkt des Bildgebers 28f erfasst wird. Dann wurde jede einzelne Referenzeinheit von jedem Bildpunkt der nebeneinander angeordneten Bildgeber 28, im bevorzugten Ausführungsbeispiel handelt es sich hierbei um Zeilensensoren, d.h. aus jedem Betrachtungswinkel α erfasst. Damit wird es möglich, jeden Objektbildpunkt, d.h. jeden unter dem Betrachtungswinkel a auf den Bildsensoren abgebildeten Punkt der zu inspizierenden Produktoberfläche durch die Abbildung aller geometrischen und radiometrischen Referenzen auf jeden Bildpunkt aller N Zeilensensoren geometrisch und radiometrisch individuell zu kalibrieren.

Aus dem so gebildeten zweidimensionalen Bild werden mittels eines Kalibrierprogramms die für die individuelle bildpunktgenaue geometrische und radiometrische Einrichtung und/oder Kalibrierung notwendigen Parameter abgeleitet. Die Bildgeber 28 werden mittels der abgeleiteten Parameter kalibriert. Die erfindungsgemäß schmalen Referenzen werden alle von jedem Bildpunkt jeder Kamera während des motorischen Transportes in einer vordefinierten Weise und durch eine bekannte Quergeschwindigkeit ebenfalls zu einem definierten Zeitpunkt ab dem Auslösen der Bewegung der Referenzen erfasst. Das vollständige erstellte zweidimensionale Bild enthält nach einem einzigen Durchlauf aller Referenzen durch die aneinandergereihten Bildfelder der Zeilenkameras 28 alle benötigen Informationen zur geometrischen und radiometrischen Kalibrierung aller einzelnen Bildgeber 28 sowie des Verbundes dieser Zeilenkameras. Der gesamte Kalibrierungs- und Einrichtvorgang zur Sicherstellung des Gleichlaufs aller Kameras 28 lässt sich damit vollautomatisch und ohne manuelles Eingreifen wie Auflegen und Entnehmen von Referenzen durchführen. Durch die hohe Geschwindigkeit des automatischen Abtastens aller Referenzen in nur wenigen Sekunden kann damit eine Rekalibrierung in kurzen Zeitabständen wiederholt werden und damit erstmalig in der Oberflächeninspektion absolut stabile Systeme für die farbtüchtige und für die Schwarz-Weiß-Inspektion realisiert werden trotz der schwierigen Umgebungsbedingungen eines industriellen Umfeldes wie schwankende Temperaturen, Vibrationen usw.

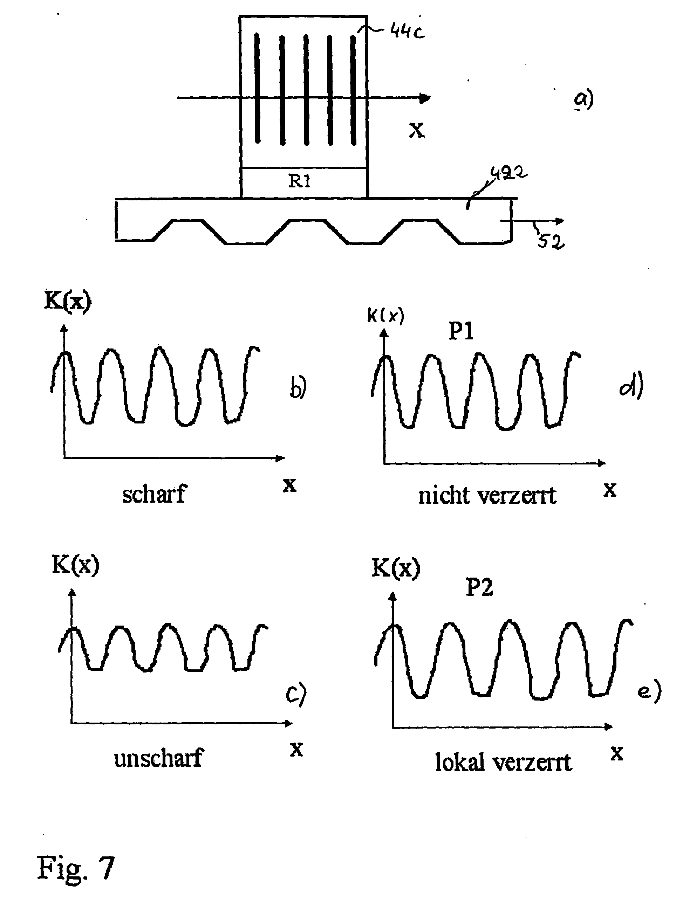

Anhand der Figuren 7, 8 und 9 sollen verschiedene Ausgestaltungen der einzelnen Referenzeinheiten 44 erläutert werden, genauer die Ausgestaltung der den Bildgebern zugewandten Oberfläche 70 der einzelnen Referenzeinheiten.

Figur 7 zeigt beispielhaft eine geometrische Referenz, welche zur Kalibrierung der Bildschärfe sowie zur Ausmessung und Kompensation der durch die Objektivverzerrungen bewirkten lokalen Abbildungsfehler für jeden Betrachtungswinkel α aller Zeilenkameras 28a bis 28f dient. In Figur 7 a) ist eine Referenzeinheit 44c gezeigt, die mit R1 beschriftet ist. Die Referenzeinheit 44c ist an einem Band 42 befestigt, das sich in Pfeilrichtung 52 bewegt. Die Referenzeinheit weist fünf parallele Striche auf, die senkrecht zur Bewegungsrichtung verlaufen. Diese Striche bewegen sich durch die Bewegung des Bandes in x-Richtung. Die Breite der Striche ist dabei zweckmäßigerweise mindestens drei bis fünf Bildpunkte groß gewählt. Dadurch ist mit Sicherheit mindestens ein Bildpunkt durchmoduliert. Die geforderte lokale Bildschärfe entspricht einer vorgegebenen Amplitude der Kontrastfunktion K(x). Figur 7 b) zeigt die Kontrastfunktion für eine scharf abgebildete Referenzeinheit 44c, während Figur 7 c) die Kontrastfunktion K(x) zeigt für eine unscharf abgebildete Referenzeinheit 44c, die Amplitude der Wellenkurve ist deutlich kleiner.

Die gleiche Referenz R1 erlaubt es, die lokale geometrische Objektiwerzerrung zu messen, welche sich in einer Veränderung der lokalen Periode P1 ausdrückt. Figur 7 d) zeigt die Periode P1, wenn keine Verzerrung vorliegt, während Figur 7 e) die Kontrastfunktion K(x) zeigt, wenn die photographische Aufnahme der Referenzeinheit 44c lokal verzerrt ist. Die Periode P2 ist größer als die Periode P1, während die Amplitude unverändert ist.

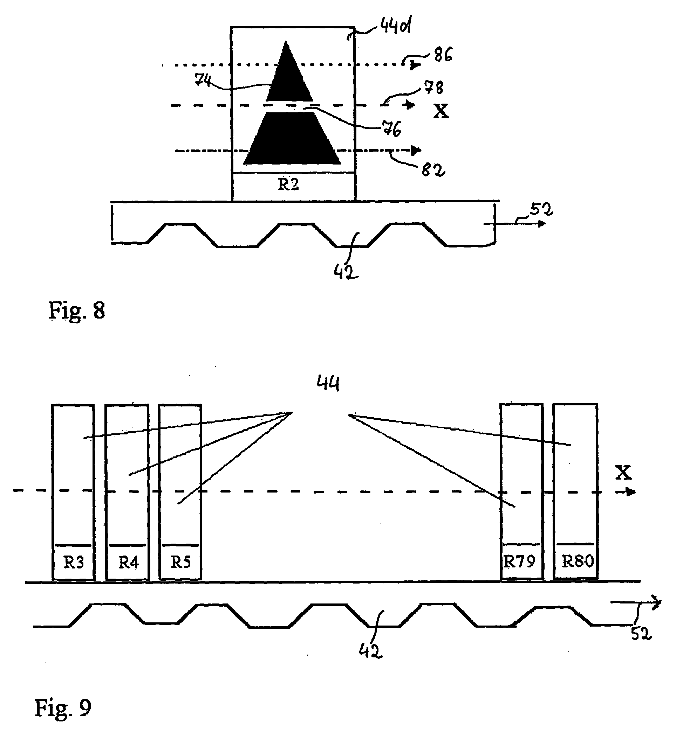

Figur 8 zeigt eine Referenzeinheit 44d, die zur geometrischen Ausrichtung aller Bildgeber 28 dient. Die Referenzeinheit ist mit R2 beschriftet und wiederum an dem Zahnriemen 42 befestigt, der sich in Pfeilrichtung 52 bewegt, wodurch sich die Referenzeinheit 44d in x-Richtung bewegt. Die Referenzeinheit 44d zeigt ein schwarzes Dreieck 74, das eine Lücke 76 aufweist. Sind alle n Zeilenkameras 28a bis 28f korrekt ausgerichtet, so sollten alle ihre Bildpunkte in die Lücke 76 fallen, was einer Spur 78 entspricht. Entstehen im zweidimensionalen Bild längere dunkle Unterbrechungen 80, wie in Figur 6 für die Referenzeinheit R12 gezeigt, so entspricht dies einer fehlerhaften Spur 82 in Figur 8. In Figur 6 trifft das für den Bildgeber 28c zu. Entstehen dagegen kurze dunkle Unterbrechungen 84 wie in Figur 6 für Bildgeber 28d, so entspricht das einer fehlerhaften Spur 86 in Figur 8. Damit erkennt man mithilfe der Referenzeinheit 44d sowohl die Richtung der fehlerhaften Ausrichtung (in Bewegungsrichtung oder entgegen der Bewegungsrichtung des zu inspizierenden Produktes) als auch das Ausmaß (entsprechend der vom Zeilensensor erfassten Breite der Marke). Da erfindungsgemäß die bewegte Referenzeinheit 44d schmal ist, d.h. nur relativ wenige Bildpunkte eines Zeilensensors umfasst (typisch zehn bis fünfzig Bildpunkte), kann die Verdrehung innerhalb der Referenz in einer einzelnen Abbildungsposition vernachlässigt werden. Die Verdrehung einer gesamten Zeilenkamera wird dadurch erkannt, dass sich die vom Zeilensensor erfasste dunkle Breite der Marke, d.h. die Länge der Striche 80, 84 während der Bewegung der Referenzeinheit 44d durch das Bildfeld der Zeilenkamera systematisch verändert.

Figur 9 zeigt beispielhaft Referenzeinheiten 44, die als Farbreferenzeinheiten dienen. Sie sind mit R3 bis R80 beschriftet. Auch diese Farbreferenzeinheiten sind an einem Band 42 befestigt, welches sich in Pfeilrichtung 52 bewegt, wodurch sich die Referenzeinheiten 44 in x-Richtung bewegen. Dem Fachmann der Fotografie und der Bildverarbeitung sind solche Farbreferenzen in Form von Farbnormtafeln (Munsell-Normtafel, Kodak-Normtafel, IT8-Normtafel, usw.) bekannt. Auch die Methoden zur Kalibrierung einer Kamera oder eines Scanners mithilfe solcher Farbnormtafeln sind Stand der Technik. Allerdings beruhen diese bekannten Verfahren auf dem Prinzip, mit einer Bildaufnahme alle Farbreferenzen zusammen aufzunehmen. Damit werden z.B. bei der Kalibrierung eines Flachbettscanners einzelne Farbreferenzen nur von bestimmten Gruppen von Sensorbildpunkten aufgenommen. Damit ist es also nicht möglich, jeden Betrachtungswinkel α und jeden damit zugeordneten Bildpunkt des Zeilensensors des Scanners individuell radiometrisch zu kalibrieren. Es müssen stark vereinfachende Annahmen über die lokale Stetigkeit der Farbfehler sowohl des Sensorchips, der aufgebrachten Farbfilter, der winkelabhängigen chromatischen Verzerrungen des Abbildungsobjektivs und der lokalen Farbfehler der Beleuchtung getroffen werden, um mit diesem vergröberten Verfahren den Scanner zu kalibrieren.

Wie bereits erläutert, treffen diese Annahmen bei dem sehr großen industriellen Bildgeber der in einem schwierigen Umfeld arbeitenden optischen Systeme oft nicht zu. Deshalb wird gemäß des erfindungsgemäßen Verfahrens und der erfindungsgemäßen Anordnung jede der beispielhaften einundachtzig Farbreferenzen durch das individuelle Bildfeld jedes Bildpunktes jeder der n Zeilenkameras 28 bewegt. Damit kann für jeden Betrachtungswinkel α und jeden Bildpunkt jedes Zeilensensors zusammen mit der Beleuchtung farbmetrisch kalibriert werden.

Die mathematischen Verfahren selbst zur Durchführung solcher Kalibrierungen mithilfe eingescannter Farbreferenzen sind dem Fachmann der Bildverarbeitung bekannt. Es gibt hierzu eine umfangreiche Literatur, siehe z.B. K.H. Franke et al: Targetbezogene Two-Colour-Kalibrierung, Seiten 11 - 18, 5. Workshop Farbbildverarbeitung, 7. - 8. Oktober 1999, TU Ilmenau, ISSN 1432-3346.

Die dargestellten und näher erläuterten Referenzeinheiten sind nur Beispiele für die Vielzahl unterschiedlicher verwendeter Referenzeinheiten. Die bevorzugte Ausführungsform zeigt N=6 nebeneinander angeordnete Zeilenkameras 28, welche im Auflicht die bewegte Produktoberfläche 14 erfassen. Denkbar sind auch Inspektionssysteme, welche im Durchlicht transparente oder zumindest teilweise transparente Produkte inspizieren wie beispielsweise Kunststofffolien und -platten, Papierbahnen, Glasflächen, Flüssigkeiten usw. Erfindungsgemäß sind die für den Gleichlauf benötigten Referenzeinheiten dann transparente und/oder wenig transparente Plättchen, welche entsprechend mit im Durchlicht erfassbaren geometrischen Markierungen oder mit im Durchlicht erfassbaren Referenzfarben gekennzeichnet sind.

Anfallende Kalibrationsdaten werden protokolliert und dem Bedienpersonal angezeigt. Sie werden zudem mit vorgegebenen Toleranzwerten verglichen. Ist z.B. bei einer Referenzeinheit 44d gemäß Figur 6 die Spur zu weit verschoben, d.h. aus dem Referenzplättchen hinaus, so kann keine automatische Justierung mehr erfolgen, der Vergleich mit einem vorgegebenen Toleranzwert ist negativ und ein Alarmsignal wird ausgegeben. Damit wird das Bedienpersonal z. B auf eine defekte oder falsch befestigte Referenzeinheit hingewiesen, die von Hand korrigiert werden, bzw. ersetzt werden muss. Bei Überschreiten der vorgegebenen Toleranz wird also keine Kalibrierung durchgeführt.

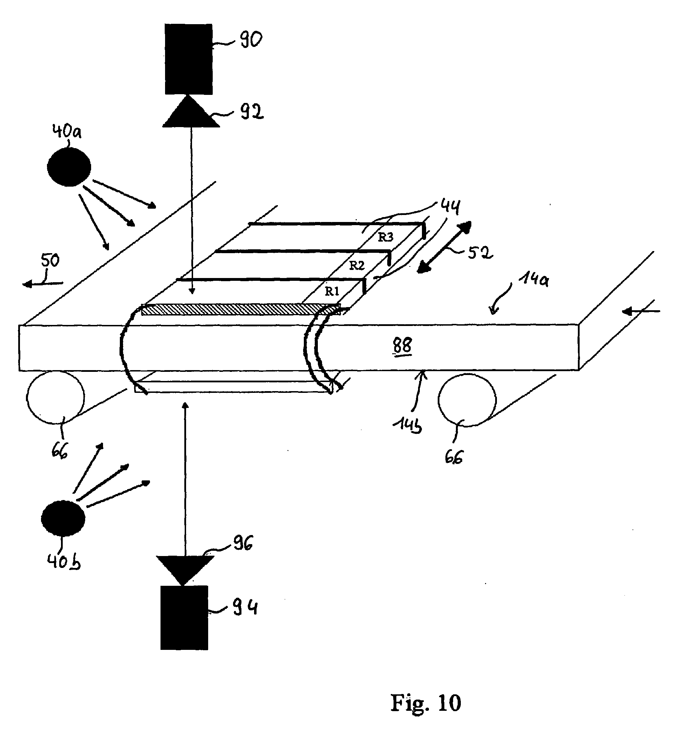

Figur 10 zeigt schematisch eine weitere Ausführungsform der erfindungsgemäßen Anordnung. Hierbei sollen für ein Produkt 88, das in Pfeilrichtung 50 über Rollen 66 bewegt wird, sowohl die obere Oberfläche 14a als auch eine untere Oberfläche 14b gleichzeitig inspiziert werden. Hierfür dienen Bildgeber 90 mit jeweils zugeordneter Optik 92, die im Wesentlichen senkrecht die obere Oberfläche 14a betrachten, und Bildgeber 94 mit zugeordneter Optik 96, die im Wesentlichen senkrecht die untere Oberfläche 14b betrachten. LEDs 40a beleuchtet dabei die Oberfläche 14a und LEDs 40b beleuchtet die Oberfläche 14b. Schematisch sind in Figur 10 nur jeweils ein Bildgeber, eine Optik und eine LED dargestellt, selbstverständlich sind aber auch hier wieder mehrere Kameras mit aneinandergrenzenden Bildfeldern vorgesehen, diesmal auf beiden Seiten des Produktes. Bei den beispielhaft dargestellten Lichtquellen 40a und 40b handelt es sich analog zum bisher erläuterten Ausführungsbeispiel vorzugsweise um eine Linienbeleuchtung, die aus einer Vielzahl von LEDs zusammengesetzt ist, es sind aber auch andere Beleuchtungsquellen denkbar. Die N Bildgeber sind wiederum in einem kleinen Abstand zur jeweiligen Oberfläche des Produktes angeordnet. In diesem Fall kann die Kalibrierung für beide Seiten mit den gleichen Referenzeinheiten 44 durchgeführt werden. Sie sind als schmalen Plättchen, die bandförmig geführt sind realisiert und werden in einem länglichen Rundlauf in Richtung des Pfeils 52 um das zu inspizierende Produkt quer zu dessen Transportrichtung über die obere und die untere Oberfläche geführt. Hierbei wird die Parkposition zweckmäßigerweise außerhalb des Bereiches des Produktes eingerichtet. Damit ist es möglich, exakt die gleiche geometrische und radiometrische Kalibrierung und Ausrichtung für die Ober- und die Unterseite zu erreichen bei einer signifikant kompakteren Bauweise im Vergleich zum Stand der Technik.

Neben der gleichen Inspektionsqualität für das ästhetische Bild beider Flächen lassen sich auch die genaue gegenseitige Lage von Fräsungen und Bohrlöchern, wie sie häufig bei Möbelplatten anfällt, in einfachster Weise durchführen.

Sowohl bei einem Inspektionssystem gemäß den Figuren 4 und 5 als auch bei der beidseitigen Inspektion gemäß Figur 10 erlaubt der Erfindungsgedanke die Lösung eines weiteren bisher mit 1-Kamera-Systemen nicht zu handhabenden Problems: das einer gewünschten lokal unterschiedlichen Bildauflösung.

Bei der Abtastung von großen Laminatfußbodenplatten mit Dimensionen bis zu 2000 x 6000 mm (Breite x Länge) müssen die Kanten mit einer vorzugsweise sehr viel höheren geometrischen Auflösung abgetastet und auf Fehlstellen überprüft werden, als dies bei der Innenfläche der Platte erforderlich ist. Bei einer 1-Kamera-Lösung muss die gesamte Auflösung so hoch gewählt werden, wie für den Kantenbereich erforderlich, so dass die inneren Bereiche der Platte mit einer unnötig hohen Auflösung abgetastet werden. Dies ist nicht nur kostspielig, sondern auch im Hinblick auf die Menge der erzeugten Bilddaten unwirtschaftlich.

In einer bevorzugten Ausführungsform werden die beiden äußeren Bildgeber mit einer höheren Auflösung (Anzahl von Bildpunkten, Zeilenfrequenz) gewählt, als die Bildgeber, welche das Innere der Platte erfassen. Durch die Kalibrierung jedes Sensorbildpunktes mit einer Vielzahl von Referenzeinheiten kann dennoch der Gleichlauf aller Bildgeber erreicht werden.

Diese Problemstellung tritt häufig auch bei der Überwachung von bedruckten Produkten auf, bei welchen am linken und rechten Rand feine Registermarken aufgedruckt werden; diese sollten optimalerweise mit einer höheren Auflösung abgetastet werden, als die inneren Bereiche der bedruckten Oberfläche, da sie den Drucker frühzeitig über ein Driften der Registrierung informieren und ihm daher helfen, den Prozess nachzuregeln, bevor eine schlechte Druckqualität produziert wird.

Der erfindungsgemäße Einsatz einer Vielzahl von preiswerten und niedrig auflösenden Kameras, welche sich aufgrund eines eingebauten voll-automatischen Kalibriersystems immer im Gleichlauf befinden, ist daher im Vergleich zum traditionellen Einsatz von nur einer oder nur einigen teuren hochauflösenden Kameras nicht nur wirtschaftlich und technisch-konstruktiv von unbestreitbarem Vorteil, sondern ermöglicht auch in einfachster Weise eine Orts-variable Anpassung der optischen Anforderungen (lokale Auflösung, lokale radiometrische Eigenschaften usw.) bei der Inspektion von Produkten, bei welchen lokal unterschiedliche optische Anforderungen gewünscht sind. Trotz dieser unterschiedlichen Auflösung befinden sich dennoch alle Bildgeber aufgrund der beschrieben eingebauten Kalibrierverfahren im Gleichlauf.

## Patentansprüche

1. Verfahren zur visuellen Oberflächeninspektion von Oberflächen (14) mittels einer Vielzahl N von Bildgebern (28), vorzugsweise abtastende Zeilenkameras bzw. zeilenweise ausgelesene Matrixkameras, mit einer Vielzahl N von abbildenden Optiken (30), von denen jeweils eine Optik (30) einem Bildgeber (28) zugeordnet ist, wobei jeder Bildgeber (28) durch die jeweils zugeordnete Optik (30) die zu inspizierende Oberfläche mit einer Vielzahl von aneinandergereihten Sensorbildpunkten (11) objektbildpunktweise abtastet, wobei einander benachbarte Bildgeber (28) so angeordnet sind, dass ihre Bildfelder aneinander anschließen oder sich um wenige Sensorbildpunkte überlappen und gemeinsam die zu inspizierende Oberfläche überspannen; wobei bedarfsweise alle N Bildgeber (28) mit ihren zugehörigen Optiken (30) radiometrisch und geometrisch kalibriert werden, indem anstelle der zu inspizierenden Oberfläche eine Vielzahl von M Referenzeinheiten (44), die jeweils eine Breite aufweisen, so dass jede Referenzeinheit (44) nur jeweils von wenigen Sensorbildpunkten eines Bildgebers (28) gleichzeitig erfasst werden kann, von jedem der Sensorbildpunkte (11) aller N Bildgeber erfasst und entsprechende Kalibrationsparameter erzeugt und gespeichert werden; und wobei die Kalibrationsparameter auf die entsprechenden bei der Inspektion der Oberfläche von den einzelnen Sensorbildpunkten aller Bildgeber erzeugten Bildsignale angewendet werden, wobei die N Bildgeber (28) in einem Abstand über der zu inspizierenden Oberfläche (14) von etwa der Breite (36) ihres jeweiligen Bildfeldes positioniert und so eingerichtet und/oder kalibriert werden, dass sie sich geometrisch und radiometrisch verhalten wie ein einzelne oder eine kleine Anzahl von Bildgebern mit einer Anzahl von Sensorbildpunkten (11), die der Summe der Sensorbildpunkte der N Bildgeber (28) entspricht.

2. Verfahren nach Anspruch 1, bei welchem die zu inspizierende Oberfläche mit einer Beleuchtungseinrichtung (38) beleuchtet wird, die auch die Referenzeinheiten (44) bei der Kalibration beleuchtet, so dass auch die Eigenschaften der Beleuchtungseinrichtung in die Kalibrationsparameter einfließen.

3. Verfahren nach Anspruch 1 oder 2, bei dem die Referenzeinheiten unterschiedliche radiometrische und/oder geometrische Referenzmuster aufweisen;
die Referenzeinheiten (44) bei der Kalibration dicht über der Oberfläche (14) durch die Bildfelder der Bildgeber (28) in solcher Weise bewegt werden, dass im wesentlichen jeder zu kalibrierende Sensorbildpunkt jedes der N Bildgeber das Referenzmuster im wesentlichen jeder der M Referenzeinheiten (44) mindestens einmal erfasst;
ein zweidimensionales Bildes nach Durchlauf der Referenzeinheiten (44) für jeden der N Bildgeber (28) erzeugt wird, welches die M Referenzeinheiten während des Transportes durch das Bildfeld des abtastenden Bildgebers darstellt;
und aus den so aufgenommenen N zweidimensionalen Bildern die für die individuelle Bildpunkt-genaue geometrische und radiometrische Einrichtung und/oder Kalibrierung geeigneten Parameter abgeleitet werden.

4. Verfahren nach einem der vorstehenden Ansprüche, wobei die bei der Kalibrierung anfallenden Daten protokolliert und angezeigt sowie mit einstellbaren Toleranzen verglichen werden.

5. Verfahren nach Anspruch 4, wobei beim Überschreiten der Toleranzen ein Warnsignal erzeugt wird.

6. Verfahren nach Anspruch 4 oder Anspruch 5, wobei die Kalibrierung nur dann durchgeführt wird, wenn die Toleranzen nicht überschritten wurden.

7. Anordnung zur visuellen Oberflächeninspektion von Oberflächen (14), die folgendes umfasst:
eine Vielzahl N von Bildgebern (28), vorzugsweise abtastende Zeilenkameras bzw. zeilenweise ausgelesene Matrixkameras, mit einer Vielzahl N von abbildenden Optiken (30), von denen jeweils eine Optik (30) einem Bildgeber (28) zugeordnet ist, wobei jeder Bildgeber (28) durch die jeweils zugeordnete Optik (30) die zu inspizierende Oberfläche (14) jeweils mit einer Vielzahl von Sensorbildpunkten (11) objektbildpunktweise mit einer Auslesefrequenz abtasten können, wobei die N Bildgeber (28) mit ihren N Optiken (30) so angeordnet sind, dass sich ihre N Bildfelder aneinander anschließen oder mit wenigen Bildpunkten überlappen und zusammen die gesamte Breite der zu inspizierenden Oberfläche (14) abdecken, und wobei die N Bildgeber (28) in einem Abstand von der Oberfläche angeordnet sind, der in etwa der größten Breite (36) eines der N Bildfelder entspricht,
eine Anzahl M von Referenzeinheiten (44), wobei die Referenzeinheiten unterschiedliche radiometrische und/oder geometrische Referenzmuster aufweisen und eine solche Breite haben, dass jede Referenzeinheit (44) nur jeweils von wenigen Sensorbildpunkten eines Bildgebers (28) gleichzeitig erfasst werden kann,
eine motorisch angetriebene Transporteinrichtung, welche die M Referenzeinheiten (44) dicht über der Oberfläche (14) durch die Bildfelder der N Bildgeber (28) mit konstanter im Vergleich zur Auslesefrequenz der Bildgeber niedriger Geschwindigkeit bewegen kann und die M Referenzeinheiten in eine Parkposition (53) verbringen kann, die sich außerhalb der Bildfelder der N Bildgeber befindet,
eine Rechen- und Steuereinheit (56), welche die während des Durchlaufs der M Referenzeinheiten (44) durch die N Bildfelder jedes der N Bildgeber (28) erzeugten Bildsignale zu jeweils einem 2-dimensionalen Bild zusammensetzt, welches die Referenzeinheiten während des Durchlaufs durch das Bildfeld jeder der N Zeilenkameras zeigt,
und ein Kalibrationsprogramm, das auf der Recheneinheit (56) lauffähig ist und aus den aufgenommenen N zweidimensionalen Bildern die für die individuelle Bildpunkt-genaue geometrische und radiometrische Einrichtung und/oder Kalibrierung notwendigen Parameter berechnen kann, wobei das Kalibrationsprogramm ferner die N Bildgeber (28) so kalibrieren kann, dass sie sich geometrisch und radiometrisch verhalten wie ein einzelner oder eine kleine Anzahl von Bildgebern mit einer Anzahl von Sensorbildpunkten, die der Summe der Sensorbildpunkte der N Bildgeber (28) entspricht.

8. Anordnung gemäß Anspruch 7, die ferner eine Beleuchtungseinrichtung (38) zum Beleuchten der N Bildfelder aufweist, die während des Durchlaufs der Referenzeinheiten (44) diese anstelle der Bildfelder beleuchtet.

9. Anordnung gemäß einem der Ansprüche 7 und 8, wobei die Parkposition (53) ein optisch dichtes Abschirm-Element (68) umfasst, durch das die Referenzeinheiten (44) vor Staub und Licht geschützt sind.

10. Anordnung gemäß einem der Ansprüche 7 bis 9, wobei die Anzahl M der Referenzeinheiten (44) zwischen 50 und 200 und die Breite einer Referenzeinheit zwischen 10 und 100 Objektbildpunkten beträgt.

11. Anordnung gemäß einem der Ansprüche 7 bis 10, wobei zumindest einige Referenzeinheiten (44) Muster aufzeigen, welche geeignet sind für die radiometrische Kalibrierung der Empfindlichkeit der abtastenden Bildgeber auf eine der Eigenschaften
- spektrale Intensität,
- Polarisation,
- Glanz,
- optische Diffusion und Remission,
- Fluoreszenz,
- 3D Charakteristiken,
- Lichthof.

12. Anordnung gemäß einem der Ansprüche 7 bis 11, wobei zumindest einige Referenzeinheiten (44) geometrische Muster aufzeigen, welche geeignet sind für das Einrichten und für die geometrische Kalibrierung der Bildgeber (28).

13. Anordnung gemäß einem der Ansprüche 7 bis 12, wobei zumindest einige Referenzeinheiten (44) transparente Muster aufzeigen, welche geeignet sind für das Einrichten und Kalibrieren von Bildgebern, welche zumindest teilweise transparente Produkte unter einer Durchlicht-Beleuchtung inspizieren.

14. Anordnung gemäß einem der Ansprüche 7 bis 13, wobei die abtastenden Bildgeber (28) Zeilensensoren sind.

15. Anordnung gemäß einem der Ansprüche 7 bis 13, wobei die abtastenden Bildgeber (28) Bildsensoren mit mehreren eng benachbarten Bildzeilen sind.

16. Anordnung gemäß einem der Ansprüche 7 bis 13, wobei die abtastenden Bildgeber (28) Flächen-Sensoren sind, bei welchen nur eine Zeile oder nur wenige Zeilen ausgelesen werden.

17. Anordnung gemäß einem der Ansprüche 7 bis 16, wobei wenigstens einige der N Bildgeber (28) eine unterschiedliche Auflösung in Quer- und/oder Längsrichtung haben.

18. Anordnung gemäß einem der Ansprüche 7 bis 17, wobei mindestens eine Aufnahmevorrichtung für ein externes Kalibrier- und Prüfsystem vorhanden ist, mit welchem oder mit welchen die Qualität der Referenzeinheiten (44) selbst in situ überprüft werden kann.

19. Anordnung gemäß einem der Ansprüche 7 bis 17, wobei mindestens ein Kalibrier- und Prüfsystem für die Prüfung der Qualität der Referenzeinheiten selbst eingebaut ist.

20. Anordnung gemäß einem der Ansprüche 7 bis 19, wobei die visuelle Inspektion der Oberfläche (14a, 14b) die gleichzeitige Inspektion der Ober- und der Unterseite eines Produktes mit jeweils N Bildgebern (90, 94) umfasst, wobei die motorisch angetriebene Transporteinrichtung so angeordnet ist, dass die Referenzeinheiten (44) auf einer Umlaufbahn von der Oberseite über die Ränder bis zur Unterseite geführt werden, sodass alle 2 N Bildgeber (90, 94) die gleichen Referenzeinheiten (44) erfassen und wobei sich die Parkposition außerhalb der Bildfelder der 2 N Bildgeber seitlich neben dem von dem zu inspizierenden Produkt beanspruchten Raum befindet.

## Claims

1. Procedure for the visual surface inspection of surfaces (14) by means of a large number N of imaging devices (28), preferably line scanning cameras or matrix cameras read out line by line, with a large number N of imaging optic systems (30) of which one imaging optic system (30) is assigned to one imaging device(28), whereby each imaging device(28) scans the surface to be inspected through the assigned optic system (30) with a large number of aligned sensor pixels (11) object pixel-wise, whereby neighboring image generators (28) are aligned in such a way that their fields of view connect up to each other or overlap by a few sensor pixels and together span the surface to be inspected; whereby if necessary all N image generators (28) with their assigned optic systems (30) are calibrated radiometrically and geometrically in that instead of the surface to be inspected a large number of M reference units (44), each of which has a width so that each reference unit (44) can only be detected simultaneously by few sensor pixels of an imaging device(28), are detected by each of the sensor pixels (11) of all N image generators and appropriate calibration parameters are generated and stored; and whereby the calibration parameters are applied to the appropriate image signals generated during the inspection of the surface by the individual sensor pixels of all image generators, whereby the N image generators (28) are positioned at a distance above the surface to be inspected (14) of about the width (36) of their respective fields of view and are set up and/or calibrated in such a way that they behave geometrically and radiometrically like one single or a small number of image generators with a number of sensor pixels (11) corresponding to the sum of the sensor pixels of the N image generators (28).

2. Procedure in accordance with Claim 1, in which the surface to be inspected is illuminated using an illumination device (38) which also illuminates the reference units (44) during calibration so that the properties of the illumination device (38) are also included in the calibration parameters.

3. Procedure in accordance with Claim 1 or 2, in which the reference units have different radiometric and/or geometric reference patterns;
during calibration the reference units (44) are moved close to the surface (14) through the fields of view of the image generators (28) in such a way that each sensor pixel (11) to be calibrated of each of the N image generators (28) essentially detects the reference pattern of each of the M reference units (44) at least once;
after the reference units (44) have run through, a two-dimensional image is generated for each of the N image generators (28), representing the M reference units during transportation through the field of view of the scanning image generator (28);
and from the N two-dimensional images thus recorded, the parameters suitable for the individual, pixel-by-pixel geometric and radiometric equipment and/or calibration are derived.

4. Procedure in accordance with one of the above Claims, whereby the data collected during calibration are recorded and displayed, and are compared with adjustable tolerances.

5. Procedure in accordance with Claim 4, whereby a warning signal is generated when the tolerances are exceeded.

6. Procedure in accordance with Claim 4 or Claim 5, whereby calibration is only effected if the tolerances have not been exceeded.

7. Arrangement for the visual surface inspection of surfaces (14) comprising the following:
a large number N of image generators (28), preferably line scanning cameras or matrix cameras read out line by line, with a large number N of imaging optic systems (30) of which one imaging optic system (30) is assigned to one imaging device(28), whereby each imaging device(28) can scan the surface to be inspected (14) through the assigned optic system (30) with a large number of sensor pixels (11) object pixel-wise with a read-out frequency, whereby the N image generators (28) with their N optic systems (30) are arranged in such a way that their N fields of view connect up to each other or overlap by a few pixels and together cover the entire width of the surface to be inspected (14), and whereby the N image generators (28) are positioned at a distance from the surface corresponding approximately to the greatest width (36) of one of the N fields of view , a number M of reference units (44), whereby the reference units have different radiometric and/or geometric reference patterns and are of such a width that each reference unit (44) can only be detected simultaneously by few sensor pixels (11) of one imaging device (28),
a motor-driven transportation device which can move the M reference units (44) close to the surface (14) through the fields of view of the N image generators (28) at a constant, in comparison to the read-out frequency of the image generators slow speed and which can move the M reference units to a parked position (53) which is located outside the fields of view of the N image generators,
a processing and control unit (56) which during the travel of the M reference units (44) through the N fields of view composes each of the image signals generated by the N image generators (28) to form a 2-dimensional image showing the reference units as they travel through the field of view of each of the N line scanning cameras,
and a calibration program which can run on the processing unit (56) and which, from the recorded N two-dimensional images, can calculate the parameters necessary for the individual, pixel-by-pixel geometric and radiometric device and/or calibration, whereby the calibration program can also calibrate the N image generators (28) in such a way that they behave geometrically and radiometrically like one single or a small number of image generators with a number of sensor pixels corresponding to the sum of the sensor pixels of the N image generators (28).

8. Arrangement in accordance with Claim 7, which also has an illumination device (38) for illuminating the N fields of view, which, during the travel of the reference units (44), illuminates the latter instead of the fields of view.

9. Arrangement in accordance with one of the Claims 7 and 8, whereby the parked position (53) comprises an optically sealed shielding element (68) through which the reference units (44) are protected from dust and light.

10. Arrangement in accordance with one of the Claims 7 to 9, whereby the number M of reference units (44) is between 50 and 200 and the width of a reference unit is between 10 and 100 object pixels.

11. Arrangement in accordance with one of the Claims 7 to 10, whereby at least some reference units (44) show patterns which are suitable for the radiometric calibration of the sensitivity of the scanning image generators with respect to one of the properties
- spectral intensity,
- polarization,
- gloss,
- optical diffusion and remission,
- fluorescence,
- 3D characteristics,
- halo.

12. Arrangement in accordance with one of the Claims 7 to 11, whereby at least some reference units (44) show geometric patterns which are suitable for the setting up and geometric calibration of the image generators (28).

13. Arrangement in accordance with one of the Claims 7 to 12, whereby at least some reference units (44) show transparent patterns which are suitable for the setting up and calibration of image generators which at least partly inspect transparent products under transmitted light illumination.

14. Arrangement in accordance with one of the Claims 7 to 13, whereby the scanning image generators (28) are line sensors.

15. Arrangement in accordance with one of the Claims 7 to 13, whereby the scanning image generators (28) are image sensors with several image lines close together.

16. Arrangement in accordance with one of the Claims 7 to 13, whereby the scanning image generators (28) are area image sensors by which only one line or only a few lines are read out.

17. Arrangement in accordance with one of the Claims 7 to 16, whereby at least some of the N image generators (28) have different resolutions in transverse and/or longitudinal direction.

18. Arrangement in accordance with one of the Claims 7 to 17, whereby there is at least one holding device for an external calibration and testing system with which the quality of the reference units (44) themselves can be examined in situ.

19. Arrangement in accordance with one of the Claims 7 to 17, whereby at least one calibration and testing system is integrated for testing the quality of the reference units themselves.

20. Arrangement in accordance with one of the Claims 7 to 19, whereby the visual inspection of the surface (14a, 14b) comprises the simultaneous inspection of the upper and the lower sides of a product using N image generators (90, 94), whereby the motor-driven transportation device is arranged in such a way that the reference units (44) are guided on a circular path from the upper side over the edges to the lower side, so that all 2 N image generators (90, 94) detect the same reference units (44) and whereby the parked position is located outside the fields of view of the 2 N image generators laterally beside the space occupied by the product to be inspected.

## Revendications

1. Procédé d'inspection visuelle de surfaces (14) à l'aide d'une pluralité N de fournisseurs d'images (28), de préférence des caméras de lignes à balayage ou des caméras matricielles à lecture par ligne, avec une pluralité N d'optiques représentatives (30), parmi lesquelles chaque optique (30) est attribuée à un fournisseur d'images (28), chaque fournisseur d'images (28) balayant par point d'image d'objet, par le biais de l'optique attribuée (30), la surface à inspecter avec une pluralité de points d'image de capteur alignés (11), les fournisseurs d'images voisins les uns des autres (28) étant disposés de telle sorte que leurs champs d'image soient contigus ou qu'ils se chevauchent sur quelques points d'image de capteur et qu'ils recouvrent ensemble la surface à inspecter ; si besoin, tous les N fournisseurs d'images (28) étant calibrés sur le plan radiométrique et géométrique avec leurs optiques attribuées (30), à la place de la surface à inspecter, une pluralité de M unités de référence (44), qui présentent chacune une largeur, de sorte que chaque unité de référence (44) ne peut être détectée que par quelques points d'image de capteur d'un fournisseur d'images (28) simultanément, est détectée par chacun des points d'image de capteur (11) de tous les N fournisseurs d'images et génère et enregistre des paramètres de calibrage correspondants ; et les paramètres de calibrage étant appliqués aux signaux d'images correspondants générés lors de l'inspection de la surface par les différents points d'image de capteur de tous les fournisseurs d'images, les N fournisseurs d'images (28) étant positionnés et installés et/ou calibrés à une distance supérieure à la surface à inspecter (14) correspondant environ à la largeur (36) de chaque champ d'image, de sorte qu'ils se comportent sur le plan géométrique et radiométrique comme chacun ou un petit nombre de fournisseurs d'images avec un certain nombre de points d'image de capteur (11), qui correspond à la somme des points d'image de capteur des N fournisseurs d'images (28).

2. Procédé selon la revendication 1, dans lequel la surface à inspecter est éclairée avec un dispositif d'éclairage (38), qui éclaire également les unités de référence (44) lors du calibrage de sorte que les caractéristiques du dispositif d'éclairage sont également intégrées dans les paramètres de calibrage.

3. Procédé selon la revendication 1 ou 2, dans lequel les unités de référence présentent des échantillons de référence radiométriques et/ou géométriques différents ;
lors du calibrage, les unités de référence (44) sont déplacées tout près au-dessus de la surface (14) à travers les champs d'image (28) des fournisseurs d'images de sorte que sensiblement chaque point d'image de capteur à calibrer de chacun des N fournisseurs d'images
détecte au moins une fois l'échantillon de référence sensiblement de chacune des M unités de référence (44) ;
une image en deux dimensions est générée après le balayage des unités de référence (44) pour chacun des N fournisseurs d'images (28), ladite image représentant
les M unités de référence pendant le transport par le champ d'image du fournisseur d'images à balayage ;
et à partir des N images en deux dimensions ainsi enregistrées, sont calculés les paramètres adaptés à l'installation et/ou au calibrage géométriques et radiométriques individuels, au point d'image près.

4. Procédé selon l'une des revendications précédentes, dans lequel les données obtenues lors du calibrage sont consignées et affichées ainsi que comparées avec des tolérances ajustables.

5. Procédé selon la revendication 4, dans lequel en cas de dépassement des tolérances, un signal d'avertissement est généré.

6. Procédé selon la revendication 4 ou la revendication 5, dans lequel le calibrage ne peut être effectué que si les tolérances n'ont pas été dépassées.

7. Agencement destiné à l'inspection visuelle de surfaces (14) comprenant :
une pluralité N de fournisseurs d'images (28), de préférence des caméras de lignes à balayage ou des caméras matricielles à lecture par ligne, avec une pluralité N d'optiques représentatives (30), parmi lesquelles chaque optique (30) est attribuée à un fournisseur d'images (28), chaque fournisseur d'images (28) pouvant balayer par point d'image d'objet, par le biais de l'optique attribuée (30), la surface à inspecter avec une pluralité de points d'image de capteur (11), avec une fréquence de balayage, les N fournisseurs d'images (28) avec leurs N optiques (30) étant disposés de telle sorte que leurs champs d'image soient contigus ou qu'ils se chevauchent avec quelques points d'image et
qu'ils couvrent ensemble toute la largeur de la surface à inspecter (14), et les N fournisseurs d'images (28) étant disposés à une distance de la surface qui correspond environ à la plus grande largeur (36) d'un des N champs d'image,
un certain nombre M d'unités de référence (44), les unités de référence présentant des échantillons de référence radiométriques et/ou géométriques différents et possédant une telle largeur que chaque unité de référence (44) peut être détectée uniquement par quelques points d'image de capteur d'un fournisseur d'images (28) simultanément,
une installation de transport motorisée qui peut déplacer les M unités de référence (44) tout près au-dessus de la surface (14) à travers les champs d'image des N fournisseurs d'images (28) à une vitesse constante basse par rapport à la fréquence de balayage des fournisseurs d'images et qui peut transférer les M unités de référence dans une position de stationnement (53) qui se trouve en dehors des champs d'image des N fournisseurs d'images,
une unité de calcul et de commande (56) qui associe les signaux d'image générés pendant le balayage des M unités de référence (44) à travers les N champs d'images de chacun des N fournisseurs d'images à chaque image en deux dimensions, qui montre les unités de référence pendant le balayage à travers le champ d'image de chacune des N caméras de lignes,
et un programme de calibrage qui peut fonctionner sur l'unité de calcul (56) et peut calculer à partir des N images en deux dimensions les paramètres nécessaires pour installations et/ou le calibrage géométriques et radiométriques individuels au point d'image près, le programme de calibrage pouvant en outre calibrer les N fournisseurs d'images (28) de façon à ce qu'ils se comportent sur le plan géométrique et radiométrique comme un ou une petite quantité de fournisseurs d'images avec un certain nombre de points d'image de capteur qui correspond à la somme des points d'image de capteur des N fournisseurs d'images (28).

8. Agencement selon la revendication 7, lequel présente, en outre, un dispositif d'éclairage (38) pour l'éclairage des N champs d'image, qui éclaire ceux-ci à la place des champs d'image pendant le balayage des unités de référence (44).

9. Agencement selon l'une des revendications 7 et 8, dans lequel la position de stationnement (53) comprend un élément de blindage à densité optique (68), qui protège les unités de référence (44) de la poussière et de la lumière.

10. Agencement selon l'une des revendications 7 à 9, dans lequel le nombre M d'unités de référence (44) se trouve entre 50 et 200 et la largeur d'une unité de référence se trouve entre 10 et 100 points d'image d'objet.

11. Agencement selon l'une des revendications 7 à 10, dans lequel au moins certaines unités de référence (44) montrent des échantillons qui sont conçus pour le calibrage radiométrique de la sensibilité des fournisseurs d'images à balayage à l'une des caractéristiques suivantes
- intensité spectrale,
- polarisation,
- brillance,
- diffusion optique et réflexion spectrale,
- fluorescence,
- caractéristiques 3D,
- halo.

12. Agencement selon l'une des revendications 7 à 11, dans lequel au moins certaines unités de référence (44) montrent des échantillons géométriques qui sont conçus pour l'installation et pour le calibrage géométrique des fournisseurs d'images (28).

13. Agencement selon l'une des revendications 7 à 12, dans lequel au moins certaines unités de référence (44) montrent des échantillons transparents qui sont conçus pour l'installation et le calibrage de fournisseurs d'images qui inspectent des produits au moins partiellement transparents sous un éclairage par transparence.

14. Agencement selon l'une des revendications 7 à 13, dans lequel les fournisseurs d'images à balayage (28) sont des détecteurs de lignes.

15. Agencement selon l'une des revendications 7 à 13, dans lequel les fournisseurs d'images à balayage (28) sont des capteurs d'image avec plusieurs lignes d'exploration d'image voisines.

16. Agencement selon l'une des revendications 7 à 13, dans lequel les fournisseurs d'images à balayage (28) sont des détecteurs de surfaces qui ne balayent qu'une ligne ou seulement quelques lignes.

17. Agencement selon l'une des revendications 7 à 16, dans lequel au moins quelques-uns des N fournisseurs d'images (28) ont une résolution différente dans le sens traversal et/ou longitudinal.

18. Agencement selon l'une des revendications 7 à 17, dans lequel au moins un dispositif d'enregistrement est disponible pour un système de calibrage et de contrôle externe, avec lequel ou avec lesquels la qualité des unités de référence (44) peut être vérifiée in situ.

19. Agencement selon l'une des revendications 7 à 17, dans lequel au moins un système de calibrage et de contrôle est installé pour le contrôle de la qualité des unités de référence.

20. Agencement selon l'une des revendications 7 à 19, dans lequel l'inspection visuelle de la surface (14a, 14b) comprend l'inspection simultanée de la face supérieure et de la face inférieure d'un produit avec les N fournisseurs d'images (90, 94), l'installation de transport motorisée étant conçue de telle sorte que les unités de référence (44) sont déplacées sur une orbite de la face supérieure au-dessus des bords jusqu'à la face inférieure de sorte que les 2 N fournisseurs d'images (90, 94) comprennent les mêmes unités de référence (44) et la position de stationnement se trouve en dehors des champs d'image des 2 N fournisseurs d'images sur le côté, à côté de l'espace sollicité par le produit à inspecter.
